# EUROPÄISCHE PATENTSCHRIFT

(11) **EP 4 127 332 B1**
(45) Veröffentlichungstag und Bekanntmachung des Hinweises auf die Patenterteilung: **29.05.2024**
(21) Anmeldenummer: 21706932.7
(22) Anmeldetag: 19.02.2021
(51) Int. Cl.: E03C 1/04, F16K 11/00, G05D 23/13

(54) **SANITÄRARMATUR MIT EINEM NICHT-AXIALEN THERMOSTATMISCHER SOWIE VERFAHREN ZUR MONTAGE EINER SANITÄRARMATUR**
SANITARY FITTING WITH A NON-AXIAL THERMOSTATIC MIXER, AND METHOD FOR MOUNTING A SANITARY FITTING
ROBINETTERIE SANITAIRE DOTÉE D'UN MÉLANGEUR THERMOSTATIQUE NON AXIAL ET PROCÉDÉ DE MONTAGE D'UNE ROBINETTERIE SANITAIRE

(30) Priorität: 27.03.2020 DE 102020108544
(43) Veröffentlichungstag der Anmeldung: 08.02.2023
(73) Patentinhaber: Grohe AG, 58675 Hemer (DE)
(72) Erfinder: KOSTORZ, Ole Benedikt, 58706 Menden (DE)
(86) Internationale Anmeldenummer: PCT/EP2021/054178
(87) Internationale Veröffentlichungsnummer: WO 2021/190839

(56) Entgegenhaltungen:
- DE-A1-102009 007 538
- DE-T5-112017 000 317
- FR-A1- 3 050 251
- KR-A- 20110 065 308

## Beschreibung

Die vorliegende Erfindung betrifft eine Sanitärarmatur gemäß dem Oberbegriff von Anspruch 1 sowie ein Verfahren zur Montage einer Sanitärarmatur, durch die Kaltwasser und Heißwasser zu einem Mischwasser mit einer gewünschten Mischwassertemperatur mischbar ist. Mittels derartiger Sanitärarmaturen ist das Mischwasser insbesondere an Waschbecken, Spülbecken, Duschen und/oder Badewannen bereitstellbar. Eine Sanitärarmatur gemäß dem Oberbegriff von Anspruch 1 ist beispielsweise aus der Druckschrift DE 11 2017 000 317 T5 bekannt.

Sanitärarmaturen können beispielsweise nach Art eines Einhebelmischers ausgebildet sein, die einen (einzigen) Bedienhebel zur Einstellung der Mischwassertemperatur und einer Abgabemenge des Mischwassers aufweisen. Die Temperatur des dem Einhebelmischer zugeführten Heißwassers ist häufig nicht konstant, sondern kann, beispielsweise im Tagesverlauf, Schwankungen unterliegen. Hierdurch schwankt selbst bei identischer Stellung des Bedienhebels die Mischwassertemperatur des durch ein Mischventil des Einhebelmischers hergestellten Mischwassers. Ein Benutzer der Sanitärarmatur kann sich somit nicht darauf verlassen, bei einer bestimmten Stellung des Bedienhebels Mischwasser mit der gewünschten Mischwassertemperatur zu zapfen, sondern muss die Mischwassertemperatur über den Bedienhebel regelmäßig nachjustieren. Zudem ist nachteilig, dass eine Gefahr von Verbrühungen besteht, wenn dem Einhebelmischer Heißwasser mit besonders hohen Heißwassertemperaturen zugeführt wird. Auch normal temperiertes Heißwasser kann bereits zu Verbrühungen führen. Zudem können Druckschwankungen des Kaltwassers oder ein Ausfall des zugeführten Kaltwassers zu Gefahren führen.

Es ist daher bereits bekannt, einem Warmwassereinlass des Mischventils der Sanitärarmatur einen Thermostatmischer vorzuordnen, durch den dem Warmwassereinlass des Mischventils Warmwasser mit einer vorgegebenen Warmwassertemperatur zuführbar ist. Hierzu mischt der Thermostatmischer das Heißwasser vorab mit Kaltwasser, um eine konstante Warmwassertemperatur zu erhalten. Das derart vorgemischte Warmwasser wird anschließend dem Warmwassereinlass des Mischventils zugeführt. Nachteilig ist, dass derartige Thermostatmischer einen großen Bauraum beanspruchen, der in Armaturengehäusen der Sanitärarmaturen häufig nicht zur Verfügung steht oder der eine Vergrößerung der Armaturengehäuse der Sanitärarmaturen erfordert. Diesbezüglich offenbaren die Dokumente KR20110065308A und DE102009007538A1 bezogene Beispiele für bekannte Sanitärarmaturen.

Aufgabe der Erfindung ist es daher, die mit Bezug auf den Stand der Technik geschilderten Probleme zumindest teilweise zu lösen und insbesondere eine Sanitärarmatur anzugeben, deren Thermostatmischer einen geringeren Bauraumbedarf aufweist. Zudem soll auch ein Verfahren angegeben werden, durch das ein Thermostatmischer der Sanitärarmatur mit einem geringen Bauraumbedarf herstellbar ist.

Diese Aufgaben werden gelöst mit einer Sanitärarmatur und einem Verfahren zu deren Montag gemäß den Merkmalen des unabhängigen Patentanspruchs. Weitere vorteilhafte Ausgestaltungen der Erfindung sind in den abhängigen Patentansprüchen angegeben.

Darüber hinaus werden die in den Patentansprüchen angegebenen Merkmale in der Beschreibung näher präzisiert und erläutert, wobei weitere bevorzugte Ausgestaltungen der Erfindung dargestellt werden. Hierzu trägt eine Sanitärarmatur bei, die zumindest die folgenden Komponenten aufweist:
- ein Armaturengehäuse;
- ein Mischventil zum Mischen von Kaltwasser und Warmwasser zu einem Mischwasser; und
- ein Thermostatmischer zum Mischen von Kaltwasser und Heißwasser zu dem Warmwasser, der ein Dehnstoffelement und einen durch das Dehnstoffelement betätigbaren Schieber zum Einstellen eines Mischungsverhältnisses zwischen dem Kaltwasser und dem Heißwasser umfasst, wobei das Dehnstoffelement und der Schieber nicht koaxial zueinander angeordnet sind, wobei der Schieber durch das Dehnstoffelement über ein Verbindungselement betätigbar ist und wobei das Verbindungselement auf den Schieber oder das Dehnstoffelement aufsteckbar und anschließend in eine Schließstellung drehbar ist, in der der Schieber und das Dehnstoffelement durch das Verbindungselement miteinander verbunden sind.

Die Sanitärarmatur kann insbesondere nach Art eines Einhebelmischers ausgebildet sein und/oder dient insbesondere der Bereitstellung eines Mischwassers an einem Waschbecken, Spülbecken, Dusche und/oder Badewanne. Weiterhin weist die Sanitärarmatur ein Armaturengehäuse auf. Das Armaturengehäuse kann zumindest teilweise aus Kunststoff und/oder Metall, wie zum Beispiel Messing oder eine Zinklegierung, bestehen. Weiterhin ist das Armaturengehäuse insbesondere an einem Träger, wie zum Beispiel einer (Küchen-)Arbeitsplatte, befestigbar.

Zudem weist die Sanitärarmatur ein Mischventil zum Mischen von Kaltwasser und Warmwasser zu einem Mischwasser auf. Das Mischventil kann beispielsweise nach Art einer Einhebelmischkartusche ausgebildet sein und/oder zumindest teilweise in dem Armaturengehäuse der Sanitärarmatur angeordnet sein. Das Mischventil kann ein Mischgehäuse aufweisen, das insbesondere zumindest teilweise aus Kunststoff besteht und/oder zumindest teilweise zylinderförmig ausgebildet ist. In dem Mischgehäuse ist zumindest teilweise ein Stellhebel beweglich befestigt, welcher der Betätigung des Mischventils dient. Der Stellhebel ist hierzu insbesondere mit einem Bedienhebel der Sanitärarmatur, beispielsweise mittels einer Schraubverbindung oder Steckverbindung, verbunden. Der Stellhebel kann, insbesondere zur Einstellung einer Mischwassertemperatur, um eine Drehachse drehbar und/oder, insbesondere zur Einstellung einer Abgabemenge des Mischwassers, um eine (insbesondere orthogonal zu der Drehachse verlaufenden) Schwenkachse schwenkbar sein. Weiterhin kann das Mischventil eine feststehende Steuerscheibe und eine bewegliche Steuerscheibe aufweisen. Die feststehende Steuerscheibe und die bewegliche Steuerscheibe können jeweils insbesondere flach bzw. scheibenförmig ausgebildet sein. Weiterhin können die feststehende Steuerscheibe und die bewegliche Steuerscheibe zumindest teilweise aus Keramik bestehen. Die feststehende Steuerscheibe ist insbesondere fest, d. h. insbesondere gegenüber dem Gehäuse nicht verschieblich oder nicht drehbar, in dem Gehäuse angeordnet, wohingegen die bewegliche Steuerscheibe insbesondere durch den Stellhebel auf der feststehenden Steuerscheibe bewegbar (insbesondere gegenüber dem Gehäuse drehbar) ist.

Weiterhin weist die Sanitärarmatur einen Thermostatmischer zum Mischen von Kaltwasser und Heißwasser zu dem Warmwasser auf. Das Kaltwasser ist dem Thermostatmischer, beispielsweise von einem öffentlichen Wasserversorgungsnetz, insbesondere über eine Kaltwasserleitung und/oder das Heißwasser dem Thermostatmischer, beispielsweise von dem öffentlichen Wasserversorgungsnetz und/oder einem Heißwasserbereiter, insbesondere über eine Heißwasserleitung zuführbar. Bei der Kaltwasserleitung und/oder der Heißwasserleitung kann es sich beispielsweise um eine Rohrleitung oder einen flexiblen Schlauch handeln. Eine Kaltwassertemperatur des Kaltwassers beträgt insbesondere maximal 25 °C (Celsius), bevorzugt 1 °C bis 25 °C, besonders bevorzugt 5 °C bis 20 °C und/oder eine Heißwassertemperatur des Heißwassers insbesondere maximal 100 °C, bevorzugt 25 °C bis 100 °C, besonders bevorzugt 55 °C bis 65 °C. Das Kaltwasser und Heißwasser sind insbesondere in einem Warmwassermischraum des Thermostatmischers zu dem Warmwasser mischbar. Der Thermostatmischer umfasst zudem ein Dehnstoffelement und einen durch das Dehnstoffelement betätigbaren Schieber. Das Dehnstoffelement erstreckt sich insbesondere entlang einer ersten Längsachse und/oder ist zumindest teilweise rotationssymmetrisch um die zumindest eine erste Längsachse ausgebildet. Weiterhin kann das Dehnstoffelement zumindest teilweise aus einem Wachs bestehen und/oder sich insbesondere in Abhängigkeit von der Mischwassertemperatur des Mischwassers, insbesondere parallel zu der ersten Längsachse, ausdehnen. Der Schieber kann zumindest teilweise aus Metall oder Kunststoff bestehen. Weiterhin kann der Schieber insbesondere zumindest teilweise zylinderförmig oder rohrförmig ausgebildet sein. Zudem kann der Schieber sich entlang einer zweiten Längsachse erstrecken. Der Schieber ist derart mit dem Dehnstoffelement verbunden, dass eine Längenänderung des Dehnstoffelements zu einer Betätigung bzw. einer Bewegung des Schiebers, insbesondere in Richtung seiner zweiten Längsachse, führt. Durch die Betätigung bzw. Bewegung des Schiebers ist ein Mischungsverhältnis zwischen dem Kaltwasser und dem Heißwasser veränderbar, wodurch eine Warmwassertemperatur des gemischten Warmwassers durch den Thermostatmischer beeinflussbar ist. Hierzu kann der Schieber insbesondere eine Spaltbreite eines Kaltwasserregelspalts und/oder eine Spaltbreite eines Heißwasserregelspalts des Thermostatmischers verändern. Das Kaltwasser ist dem Warmwassermischraum des Thermostatmischers insbesondere über den Kaltwasserregelspalt und/oder das Heißwasser dem Warmwassermischraum des Thermostatmischers insbesondere über den Heißwasserregelspalt zuführbar. Der Kaltwasserregelspalt und/oder der Heißwasserregelspalt sind insbesondere zwischen dem Schieber und einem Gehäuse des Thermostatmischers oder einem Kartuschenadapter des Mischventils ausgebildet. Die Betätigung des Schiebers führt insbesondere zu einer gleichzeitigen Änderung der Spaltbreite des Kaltwasserregelspalts und des Heißwasserregelspalts. Eine Vergrößerung der Spaltbreite des Kaltwasserregelspalts führt dabei insbesondere zu einer Verkleinerung des Heißwasserregelspalts. Entsprechend führt eine Verkleinerung der Spaltbreite des Kaltwasserregelspalts insbesondere zu einer Vergrö-ßerung des Heißwasserregelspalts. Weiterhin führt eine Ausdehnung bzw. eine Verlängerung des Dehnstoffelements insbesondere zu einer Vergrößerung der Spaltbreite des Kaltwasserregelspalts und einer Verkleinerung der Spaltbreite des Heißwasserregelspalts. Entsprechend führt eine Schrumpfung bzw. eine Verkürzung des Dehnstoffelements insbesondere zu einer Verkleinerung der Spaltbreite des Kaltwasserregelspalts und einer Vergrößerung der Spaltbreite des Heißwasserregelspalts. Eine steigende Mischwassertemperatur des Mischwassers kann somit zu einer sinkenden Warmwassertemperatur des Warmwassers führen. Weiterhin kann somit eine sinkende Mischwassertemperatur des Mischwassers zu einer steigenden Warmwassertemperatur des Warmwassers führen. Übersteigt die Mischwassertemperatur des Mischwassers beispielsweise einen Grenzwert, kann der Schieber den Heißwasserregelspalt insbesondere vollständig verschließen. Die Warmwassertemperatur des Warmwassers entspricht dann der Kaltwassertemperatur des Kaltwassers. Mit anderen Worten besteht das Warmwasser in diesem Fall ausschließlich aus dem Kaltwasser. Die Warmwassertemperatur des Warmwassers kann beispielsweise 1 °C bis 60 °C betragen. Das durch den Thermostatmischer gemischte Warmwasser ist anschließend dem Mischventil zuführbar, durch das das Warmwasser mit (weiterem) Kaltwasser zu dem Mischwasser mischbar ist. Das Dehnstoffelement und der Schieber sind nicht koaxial zueinander angeordnet. Dies kann insbesondere bedeuten, dass die erste Längsachse des Dehnstoffelements und die zweite Längsachse des Schiebers nicht miteinander fluchten. Weiterhin kann dies bedeuten, dass das Dehnstoffelement und der Schieber nicht axial angeordnet bzw. in Richtung ihrer Längsachsen nicht hintereinander angeordnet sind. Dies führt zu einem geringeren Bauraumbedarf des Thermostatmischers. Hierdurch kann der Thermostatmischer in dem Armaturengehäuse beispielsweise in einem zylinderförmigen Freiraum und/oder unterhalb des Mischventils angeordnet werden.

Der Schieber ist durch das Dehnstoffelement über ein Verbindungselement betätigbar. Das Verbindungselement kann zumindest teilweise aus Metall oder Kunststoff bestehen. Insbesondere kann das Verbindungselement aus Blech bestehen und/oder nach Art eines (flachen) Blechbauteils ausgebildet sein. Weiterhin kann das Verbindungselement flach und/oder nach Art einer Scheibe ausgebildet sein. Zudem kann das Verbindungselement zumindest teilweise S-förmig ausgebildet sein. Der Schieber kann durch das Verbindungselement insbesondere derart mit dem Dehnstoffelement gekoppelt sein, dass eine Längenänderung des Dehnstoffelements zur Betätigung bzw. Verstellung des Schiebers führt.

Das Verbindungselement ist auf den Schieber oder das Dehnstoffelement aufsteckbar. Hierzu kann das Verbindungselement für den Schieber und/oder das Dehnstoffelement jeweils eine Öffnung aufweisen. Weiterhin kann das Verbindungselement insbesondere in eine erste Nut des Dehnstoffelements oder in eine zweite Nut des Schiebers aufgesteckt bzw. eingesteckt werden, sodass das Verbindungselement insbesondere mit dem Dehnstoffelement oder dem Schieber formschlüssig verbunden ist. Die erste Nut des Dehnstoffelements verläuft insbesondere um die erste Längsachse des Dehnstoffelements und/oder die zweite Nut des Schiebers um die zweite Längsachse des Schiebers. In der ersten Nut des Dehnstoffelements ist das Verbindungselement insbesondere in Richtung der ersten Längsachse (im Wesentlichen) spielfrei anordenbar. In der zweiten Nut des Dehnstoffelements ist das Verbindungselement insbesondere in Richtung der zweiten Längsachse (im Wesentlichen) spielfrei anordenbar. Nach dem Aufstecken des Verbindungselements auf den Schieber oder auf das Dehnstoffelement befindet sich das Verbindungselement in einer Offenstellung. Anschließend ist das Verbindungselement, insbesondere um die erste Längsachse des Dehnstoffelements oder die zweite Längsachse des Schiebers, in eine Schließstellung drehbar. In der Schließstellung verbindet bzw. koppelt das Verbindungselement den Schieber und das Dehnstoffelement, sodass der Schieber durch das Dehnstoffelement betätigbar ist.

Das Verbindungselement kann S-förmig ausgebildet sein.

Das Verbindungselement kann zwischen einer Offenstellung und der Schließstellung drehbar sein.

Der Schieber und das Dehnstoffelement können in einem Gehäuse des Thermostatmischers angeordnet sein, das eine Montageöffnung für das Verbindungselement aufweist. Das Gehäuse kann insbesondere (im Wesentlichen) zylinderförmig ausgebildet sein. Weiterhin kann das Gehäuse zumindest teilweise aus Metall und/oder Kunststoff bestehen. Insbesondere kann es sich bei dem Gehäuse um ein Kunststoffspritzgussteil handeln. Bei der Montageöffnung handelt es sich insbesondere eine Öffnung in dem Gehäuse, durch die das Verbindungselement auf das Dehnstoffelement oder den Schieber aufsteckbar ist, wenn das Dehnstoffelement und der Schieber in dem Gehäuse angeordnet sind.

Die Montageöffnung kann in einer Umfangsfläche des Gehäuses ausgebildet sein. Bei der Umfangsfläche handelt es sich insbesondere nicht um eine Stirnfläche des Gehäuses.

Das Gehäuse kann derart in dem Armaturengehäuse angeordnet sein, dass das Verbindungselement gegen ein Lösen aus der Schließstellung gesichert ist. Hierzu kann das Gehäuse des Thermostatmischers beispielsweise in einem (rohrförmigen) Gehäuseeinsatz des Armaturengehäuses angeordnet sein. Das Armaturengehäuse, der Gehäuseeinsatz und/oder eine andere Komponente der Sanitärarmatur können insbesondere die Montageöffnung des Gehäuses des Thermostatmischers zumindest teilweise überdecken und/oder zumindest teilweise verschließen, wenn sich das Gehäuse in dem Armaturengehäuse befindet. Hierdurch ist ein Drehen des Verbindungselements aus der Schließstellung in die Offenstellung verhinderbar.

Das Verbindungselement kann eine Dicke von 1 mm (Millimeter) bis 10 mm aufweisen. Vorzugsweise kann das Verbindungselement eine Dicke von 3 mm bis 6 mm aufweisen.

Eine erste Längsachse des Dehnstoffelements und eine zweite Längsachse des Schiebers können parallel zueinander verlaufen. Dies kann insbesondere bedeuten, dass zwischen der ersten Längsachse des Dehnstoffelements und der zweiten Längsachse des Schiebers ein Abstand ausgebildet ist, der sich insbesondere orthogonal zu der ersten Längsachse und der zweiten Längsachse bemisst. Hierdurch sind das Dehnstoffelement und der Schieber insbesondere nebeneinander angeordnet.

Das Verbindungselement kann durch das Dehnstoffelement gegen eine Feder verstellbar sein. Die Feder kann beispielsweise nach Art einer Schraubenfeder ausgebildet sein. Die Feder kann insbesondere eine Gegenkraft erzeugen, durch die das Verbindungselement und somit der an dem Verbindungselement befestigte Schieber bei einem Schrumpfen des Dehnstoffelements rückstellbar sind.

Die Feder und der Schieber können insbesondere nicht koaxial zueinander angeordnet sein. Insbesondere kann die Feder eine dritte Längsachse aufweisen, die parallel zu der ersten Längsachse des Dehnstoffelements und/oder der zweiten Längsachse des Schiebers verläuft.

Das Dehnstoffelement kann in einem ersten Hohlraum eines Gehäuses des Thermostatmischers und der Schieber in einem zweiten Hohlraum des Gehäuses des Thermostatmischers angeordnet sein. Mit anderen Worten können das Dehnstoffelement und der Schieber räumlich getrennt in dem Gehäuse des Thermostatmischers angeordnet sein.

Der Schieber kann einen Heißwasserkanal für das Heißwasser aufweisen. Hierzu kann der Schieber insbesondere zumindest teilweise rohrförmig ausgebildet sein. Somit kann das Heißwasser durch den Schieber und über den Heißwasserregelspalt dem Warmwassermischraum des Thermostatmischers zuführbar sein.

Das Dehnstoffelement kann zumindest teilweise von dem Mischwasser umströmbar sein. Hierzu kann das Dehnstoffelement zumindest teilweise einen Mischwasserkanal begrenzen, durch den das durch das Mischventil gemischte Mischwasser der Auslauföffnung des Auslaufs zuführbar ist.

Einem weiteren Aspekt folgend wird auch ein Verfahren zur Montage einer Sanitärarmatur angegeben, das zumindest die folgenden Schritte umfasst:
a) Anordnen eines Schiebers und eines Dehnstoffelements in einem Gehäuse;
b) Aufstecken eines Verbindungselements auf den Schieber oder das Dehnstoffelement; und
c) Drehen des Verbindungselements in eine Schließstellung, in der der Schieber und das Dehnstoffelement durch das Verbindungselement miteinander verbunden sind.

Das Verbindungselement kann zwischen einer Offenstellung und der Schließstellung drehbar sein.

In einem Schritt d) kann ein Kartuschenadapter in einem Armaturengehäuse angeordnet werden, sodass das Verbindungselement gegen ein Lösen aus der Schließstellung gesichert ist.

Für weitere Einzelheiten des Verfahrens wird auf die Beschreibung der Sanitärarmatur vollumfänglich verwiesen.

Weiter wird auch eine Verwendung eines (hier vorgeschlagenen) Verbindungselements zur Einrichtung einer verschwenkbar einrastenden und/oder lösbaren Verbindung von benachbart angeordnetem Schieber und Dehnstoffelement in einer Sanitärarmatur vorgeschlagen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Sanitärarmatur;
- Fig. 2:: die Sanitärarmatur in einem Längsschnitt;
- Fig. 3:: ein Thermostatmischer der Sanitärarmatur mit einem Verbindungselement vor seiner Montage;
- Fig. 4:: der Thermostatmischer der Sanitärarmatur mit dem Verbindungselement in einer Offenstellung;
- Fig. 5:: der Thermostatmischer vor der Montage in einem Armaturengehäuse der Sanitärarmatur; und
- Fig. 6:: die Sanitärarmatur in einer Schnittdarstellung.

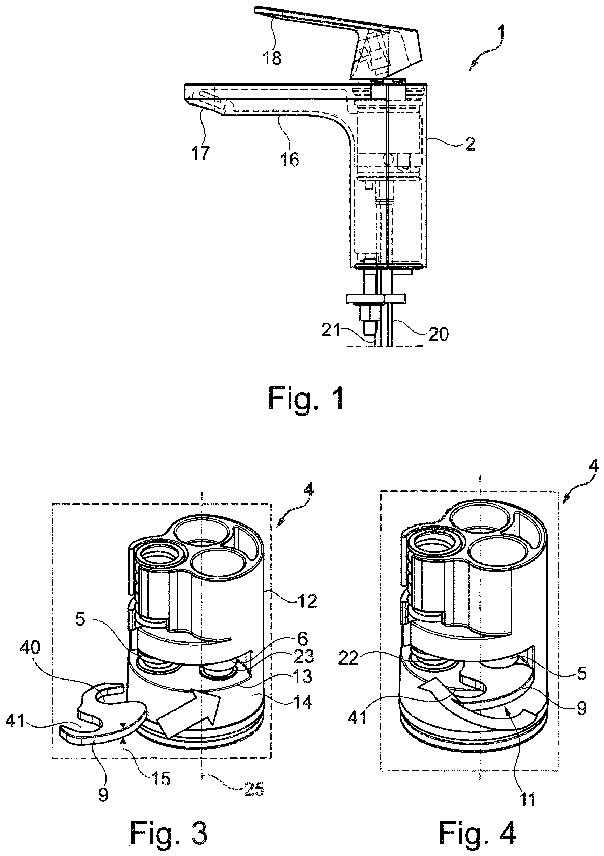

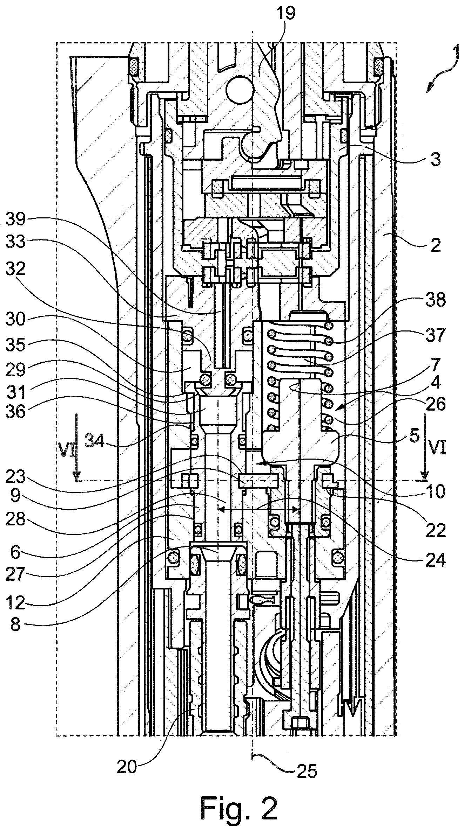

Die Fig. 1 zeigt eine erste Ausführungsvariante einer Sanitärarmatur 1 in einer Seitenansicht. Die Sanitärarmatur 1 umfasst ein Armaturengehäuse 2 mit einem Auslauf 16 und einer Auslauföffnung 17. Weiterhin umfasst die Sanitärarmatur 1 einen Bedienhebel 18, der zur Steuerung einer Abgabemenge eines Mischwassers um eine horizontale Achse schwenkbar und zur Einstellung einer Mischwassertemperatur des Mischwassers um eine vertikale Achse drehbar ist. Hierzu ist der Bedienhebel 18 mit einem in der Fig. 2 gezeigten Stellhebel 19 eines Mischventils 3 verbunden, das hier nach Art einer Einhebelmischkartusche ausgebildet ist.

Die Fig. 2 zeigt die Sanitärarmatur 1 in einem Längsschnitt entlang der in der Fig. 1 gezeigten Schnittlinie II-II. In dem Armaturengehäuse 2 der Sanitärarmatur 1 ist ein Thermostatmischer 4 zum Mischen von Kaltwasser und Heißwasser zu einem Warmwasser angeordnet. Der Thermostatmischer 4 umfasst ein Dehnstoffelement 5, das über ein Verbindungselement 9 mit einem Schieber 6 verbunden ist. Hierzu greift das Verbindungselement 9 in eine erste Nut 22 des Dehnstoffelements 5 und in eine zweite Nut 23 des Schiebers 6 ein. Das Verbindungselement 9 befindet sich in der Fig. 2 daher in einer Schließstellung 10. Das Dehnstoffelement 5 und der Schieber 6 sind nicht koaxial zueinander angeordnet, sondern eine erste Längsachse 7 des Dehnstoffelements 5 und eine zweite Längsachse 8 des Schiebers 6 verlaufen parallel und mit einem Abstand 24 zueinander. Weiterhin verlaufen die erste Längsachse 7 und die zweite Längsachse 8 parallel zu einer Gehäuselängsachse 25 des Gehäuses 12 des Thermostatmischers 4 bzw. des Armaturengehäuses 2 der Sanitärarmatur 1. Das Dehnstoffelement 5 ist in einem ersten Hohlraum 26 und der Schieber 6 in einem zweiten Hohlraum 27 des Gehäuses 12 angeordnet. In das Gehäuse 12 mündet einer Heißwasserleitung 20, über die dem Thermostatmischer 4 Heißwasser zuführbar ist. Durch den Schieber 6 erstreckt sich ein Heißwasserkanal 28, sodass der Schieber 6 rohrförmig ausgebildet ist. Das Heißwasser ist über den Heißwasserkanal 28 und durch einen Heißwasserregelspalt 29 in einen Warmwassermischraum 30 des Thermostatmischers 4 führbar. Der Heißwasserregelspalt 29 ist zwischen einer Innenfläche 31 des Schiebers 6 und einem Zapfen 32 eines Kartuschenadapters 33 des Mischventils 3 ausgebildet. Weiterhin mündet in das Gehäuse 12 eine in der Fig. 1 gezeigte Kaltwasserleitung 21. Über in der Fig. 2 nicht sichtbare Kaltwasserleitungen in dem Gehäuse 12 ist das Kaltwasser dem Mischventil 3 und einem um den Schieber 6 verlaufenden Ringspalt zuführbar. Das Kaltwasser ist dem Warmwassermischraum 30 über einen Kaltwasserregelspalt 35 zuführbar. Der Kaltwasserregelspalt 35 ist zwischen einer Au-ßenfläche 36 des Schiebers 6 und dem Gehäuse 12 des Thermostatmischers 4 ausgebildet.

Das Dehnstoffelement 5 begrenzt einen Mischwasserkanal 37, über den ein durch das Mischventil 3 gemischtes Mischwasser der in der Fig. 1 gezeigten Auslauföffnung 17 zuführbar ist. Das Dehnstoffelement 5 dehnt sich daher im Betrieb der Sanitärarmatur 1 in Abhängigkeit einer Mischwassertemperatur des Mischwassers aus und verstellt dabei den Schieber 6 über das Verbindungselement 9 parallel zu der zweiten Längsachse 8 des Schiebers 6, sodass sich eine Spaltbreite des Heißwasserregelspalts 29 und eine Spaltbreite des Kaltwasserregelspalts 35 ändern. Steigt die Mischwassertemperatur des Mischwassers, verstellt das Dehnstoffelement 5 den Schieber 6 derart, dass die Spaltbreite des Heißwasserregelspalts 29 verringert und die Spaltbreite des Kaltwasserregelspalts 35 vergrößert wird. Sinkt die Mischwassertemperatur des Mischwassers, verstellt das Dehnstoffelement 5 den Schieber 6 derart, dass die Spaltbreite des Heißwasserregelspalts 29 vergrößert und die Spaltbreite des Kaltwasserregelspalts 35 verringert wird. Hierzu ist das Dehnstoffelement 5 durch eine Feder 38, die hier nach Art einer Schraubenfeder ausgebildet und in dem Mischwasserkanal 37 angeordnet ist, vorgespannt. Das durch den Thermostatmischer 4 in dem Warmwassermischraum 30 gemischte Warmwasser ist dem Mischventil 3 über einen hier nur teilweise sichtbaren Warmwasserkanal 39 zuführbar und zusammen mit dem Kaltwasser zu dem Mischwasser mischbar.

Die Fig. 3 zeigt den Thermostatmischer 4 der in der Fig. 2 gezeigten Sanitärarmatur 1 mit dem Verbindungselement 9 vor seiner Montage. Das Gehäuse 12 des Thermostatmischers 4 ist im Wesentlichen zylinderförmig ausgebildet und erstreckt sich entlang der Gehäuselängsachse 25. Das Verbindungselement 9 ist S-förmig ausgebildet und weist eine erste Öffnung 40 und eine zweite Öffnung 41 auf. Weiterhin weist das Verbindungselement 9 eine Dicke 15 auf. Zur Verbindung des Dehnstoffelements 5 mit dem Schieber 6 ist das Verbindungselement 9 durch eine in einer Umfangsfläche 14 des Gehäuses 12 ausgebildete Montageöffnung 13 des Thermostatmischers 4 mit seiner ersten Öffnung 40 in die zweite Nut 23 des Schiebers 6 aufsteckbar.

Die Fig. 4 zeigt den Thermostatmischer 4 mit dem Verbindungselement 9, nachdem das Verbindungselement 9 mit der in der Fig. 3 gezeigten ersten Öffnung 40 in die zweite Nut 23 des Schiebers 6 gesteckt wurde. Das Verbindungselement 9 befindet sich in der Fig. 4 in einer Offenstellung 11. In der Offenstellung 11 ist das Verbindungselement 9 um die in der Fig. 2 gezeigte zweite Längsachse 8 des Schiebers 6 drehbar, bis dass das Verbindungselement 9 mit seiner zweiten Öffnung 41 in die erste Nut 22 des Dehnstoffelements 5 eingreift.

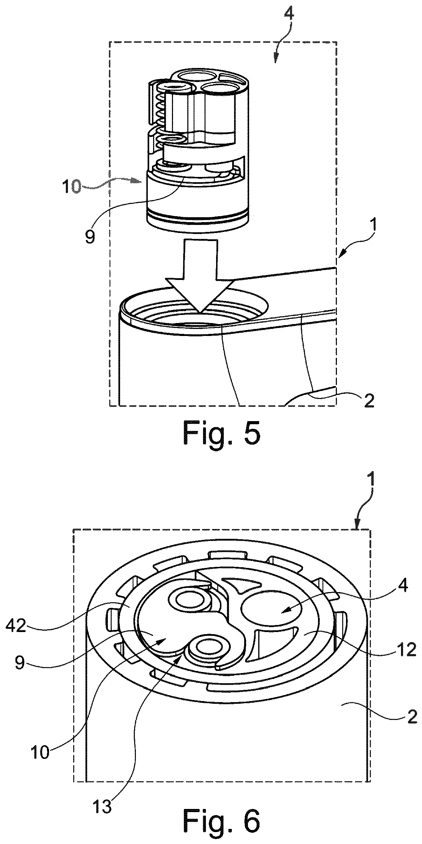

Die Fig. 5 zeigt den Thermostatmischer 4 vor der Montage in dem Armaturengehäuse 2 der Sanitärarmatur 1. In der Fig. 5 befindet sich das Verbindungselement 9 in der Schließstellung 10.

Die Fig. 6 zeigt die Sanitärarmatur 1 in einer Schnittdarstellung entlang der in der Fig. 2 gezeigten Schnittlinie VI-VI. In der Fig. 6 ist der Thermostatmischer 4 mit dem Gehäuse 12 in dem Armaturengehäuse 2 angeordnet, sodass die Montageöffnung 13 durch einen rohrförmigen Gehäuseeinsatz 42 überdeckt ist. Hierdurch ist das Verbindungselement 9 gegen ein Lösen aus der Schließstellung 10 gesichert.

Die vorliegende Erfindung ermöglicht insbesondere einen Thermostatmischer einer Sanitärarmatur mit einem geringen Bauraumbedarf auszubilden.

### Bezugszeichenliste

- 1: Sanitärarmatur
- 2: Armaturengehäuse
- 3: Mischventil
- 4: Thermostatmischer
- 5: Dehnstoffelement
- 6: Schieber
- 7: erste Längsachse
- 8: zweite Längsachse
- 9: Verbindungselement
- 10: Schließstellung
- 11: Offenstellung
- 12: Gehäuse
- 13: Montageöffnung
- 14: Umfangsfläche
- 15: Dicke
- 16: Auslauf
- 17: Auslauföffnung
- 18: Bedienhebel
- 19: Stellhebel
- 20: Heißwasserleitung
- 21: Kaltwasserleitung
- 22: erste Nut
- 23: zweite Nut
- 24: Abstand
- 25: Gehäuselängsachse
- 26: erster Hohlraum
- 27: zweiter Hohlraum
- 28: Heißwasserkanal
- 28: Heißwasserkanal
- 29: Heißwasserregelspalt
- 30: Warmwassermischraum
- 31: Innenfläche
- 32: Zapfen
- 33: Kartuschenadapter
- 35: Kaltwasserregelspalt
- 36: Außenfläche
- 37: Mischwasserkanal
- 38: Feder
- 39: Warmwasserkanal
- 40: erste Öffnung
- 41: zweite Öffnung
- 42: Gehäuseeinsatz

## Patentansprüche

1. Sanitärarmatur (1), zumindest aufweisend:
- ein Armaturengehäuse (2);
- ein Mischventil (3) zum Mischen von Kaltwasser und Warmwasser zu einem Mischwasser; und
- ein Thermostatmischer (4) zum Mischen von Kaltwasser und Heißwasser zu dem Warmwasser, der ein Dehnstoffelement (5) und einen durch das Dehnstoffelement (5) betätigbaren Schieber (6) zum Einstellen eines Mischungsverhältnisses zwischen dem Kaltwasser und dem Heißwasser umfasst, **dadurch gekennzeichnet, dass** das Dehnstoffelement (5) und der Schieber (6) nicht koaxial zueinander angeordnet sind, wobei der Schieber (6) durch das Dehnstoffelement (5) über ein Verbindungselement (9) betätigbar ist und wobei das Verbindungselement (9) auf den Schieber (6) oder das Dehnstoffelement (5) aufsteckbar und anschließend in eine Schließstellung (10) drehbar ist, in der der Schieber (6) und das Dehnstoffelement (5) durch das Verbindungselement (9) miteinander verbunden sind.

2. Sanitärarmatur (1) nach Patentanspruch 1, wobei das Verbindungselement (9) S-förmig ausgebildet ist.

3. Sanitärarmatur (1) nach einem der vorhergehenden Patentansprüche, wobei das Verbindungselement (9) zwischen einer Offenstellung (11) und der Schließstellung (10) drehbar ist.

4. Sanitärarmatur (1) nach einem der vorhergehenden Patentansprüche, wobei der Schieber (6) und das Dehnstoffelement (5) in einem Gehäuse (12) des Thermostatmischers (4) angeordnet sind, der eine Montageöffnung (13) für das Verbindungselement (9) aufweist.

5. Sanitärarmatur (1) nach Patentanspruch 4, wobei die Montageöffnung (13) in einer Umfangsfläche (14) des Gehäuses (12) ausgebildet ist

6. Sanitärarmatur (1) nach Patentanspruch 4 oder 5, wobei das Gehäuse (12) derart in dem Armaturengehäuse (2) angeordnet ist, dass das Verbindungselement (9) gegen ein Lösen aus der Schließstellung (10) gesichert ist.

7. Sanitärarmatur (1) nach einem der vorhergehenden Patentansprüche, wobei das Verbindungselement (9) eine Dicke (15) von 1 mm bis 10 mm aufweist.

8. Verfahren zur Montage einer Sanitärarmatur (1), aufweisend zumindest die folgenden Schritte:
a) Anordnen eines Schiebers (6) und eines Dehnstoffelements (5) in einem Gehäuse (12);
b) Aufstecken eines Verbindungselements (9) auf den Schieber (6) oder das Dehnstoffelement (5); und
c) Drehen des Verbindungselements (9) in eine Schließstellung (10), in der der Schieber (6) und das Dehnstoffelement (5) durch das Verbindungselement (9) miteinander verbunden sind.

9. Verfahren nach Patentanspruch 8, wobei das Verbindungselement (9) zwischen einer Offenstellung (11) und der Schließstellung (10) drehbar ist.

10. Verfahren nach Patentanspruch 8 oder 9, wobei in einem Schritt d) das Gehäuse (12) in einem Armaturengehäuse (2) angeordnet wird, sodass das Verbindungselement (9) gegen ein Lösen aus der Schließstellung (10) gesichert ist.

## Claims

1. A sanitary fitting (1), at least comprising:
- one fitting housing (2);
- one mixer valve (3) for mixing cold water and hot water to form mixed water; and
- one thermostatic mixer (4) for mixing cold water and hot water to the hot water, comprising an expanding element (5) and a slide (6) which can be actuated by the expanding element (5) for setting a mixing ratio between the cold water and the hot water, **characterized in that** the expanding element (5) and the slide (6) are not arranged coaxially with respect to each other, wherein the slide (6) can be actuated by the expanding element (5) via a connecting element (9) and wherein the connecting element (9) can be plugged onto the slide (6) or the expanding element (5) and can subsequently be rotated into a closed position (10) in which the slide (6) and the expanding element (5) are connected to one another by the connecting element (9).

2. The sanitary fitting (1) according to claim 1, wherein the connecting element (9) is S-shaped.

3. The sanitary fitting (1) according to any one of the preceding claims, wherein the connecting element (9) is rotatable between an open position (11) and the closed position (10).

4. The sanitary fitting (1) according to any one of the preceding claims, wherein the slide (6) and the expanding element (5) are arranged in a housing (12) of the thermostatic mixer (4) which has a mounting opening (13) for the connecting element (9).

5. The sanitary fitting (1) according to claim 4, wherein the mounting opening (13) is formed in a circumferential surface (14) of the housing (12).

6. The sanitary fitting (1) according to claim 4 or 5, wherein the housing (12) is arranged in the fitting housing (2) in such a manner that the connecting element (9) is secured against releasing from the closed position (10).

7. The sanitary fitting (1) according to any one of the preceding claims, wherein the connecting element (9) has a thickness (15) of 1 mm to 10 mm.

8. A method for mounting a sanitary fitting (1), comprising at least the following steps:
a) arranging a slide (6) and an expanding element (5) in a housing (12);
b) plugging a connecting element (9) onto the slide (6) or the expanding element (5); and
c) rotating the connecting element (9) into a closed position (10) in which the slide (6) and the expanding element (5) are connected to one another by the connecting element (9).

9. The method according to claim 8, wherein the connecting element (9) is rotatable between an open position (11) and the closed position (10).

10. The method according to claim 8 or 9, wherein in a step d), the housing (12) is arranged in a fitting housing (2) so that the connecting element (9) is secured against releasing from the closed position (10).

## Revendications

1. Robinetterie sanitaire (1) comportant au moins :
- une monture (2) de robinetterie ;
- une soupape mélangeuse (3), destinée à mélanger de l'eau froide et de l'eau chaude en une eau mitigée ; et
- un mitigeur thermostatique (4), destiné à mélanger de l'eau froide et de l'eau très chaude pour obtenir l'eau chaude, qui comprend un élément (5) en matière expansible et un coulisseau (6) actionnable par l'élément (5) en matière expansible, destiné à régler un rapport de mélange entre l'eau froide et l'eau très chaude, **caractérisée en ce que** l'élément (5) en matière expansible et le coulisseau (6) ne sont pas placés de manière coaxiale l'un par rapport à l'autre, le coulisseau (6) étant actionnable par l'élément (5) en matière expansible par l'intermédiaire d'un élément de connexion (9) et l'élément de connexion (9) étant emboîtable sur le coulisseau (6) ou sur l'élément (5) en matière expansible et étant rotatif par la suite dans une position de fermeture (10) dans laquelle le coulisseau (6) et l'élément (5) en matière expansible sont connectés l'un avec l'autre par l'élément de connexion (9).

2. Robinetterie sanitaire (1) selon la revendication 1 du brevet, l'élément de connexion (9) étant conçu en forme de S.

3. Robinetterie sanitaire (1) selon l'une quelconque des revendications précédentes du brevet, l'élément de connexion (9) étant rotatif entre une position d'ouverture (11) et une position de fermeture (10).

4. Robinetterie sanitaire (1) selon l'une quelconque des revendications précédentes du brevet, le coulisseau (6) et l'élément (5) en matière expansible étant placés dans une monture (12) du mitigeur thermostatique (4) qui comporte une ouverture de montage (13) pour l'élément de connexion (9).

5. Robinetterie sanitaire (1) selon la revendication 4 du brevet, l'ouverture de montage (13) étant conçue dans une surface périphérique (14) de la monture (12).

6. Robinetterie sanitaire (1) selon la revendication 4 ou 5 du brevet, la monture (12) étant placée dans la monture de robinetterie (2) de telle sorte que l'élément de connexion (9) soit sécurisé contre une désolidarisation hors de la position de fermeture (10).

7. Robinetterie sanitaire (1) selon l'une quelconque des revendications précédentes du brevet, l'élément de connexion (9) présentant une épaisseur (15) de 1 mm à 10 mm.

8. Procédé, destiné au montage d'une robinetterie sanitaire (1), comportant au moins les étapes suivantes consistant à :
a) placer un coulisseau (6) et un élément (5) en matière expansible dans une monture (12) ;
b) emboîter un élément de connexion (9) sur le coulisseau (6) ou sur l'élément (5) en matière expansible ; et
c) faire tourner l'élément de connexion (9) dans une position de fermeture (10) dans laquelle le coulisseau (6) et l'élément (5) en matière expansible sont connectés l'un avec l'autre par l'élément de connexion (9).

9. Procédé selon la revendication 8 du brevet, l'élément de connexion (9) étant rotatif entre une position d'ouverture (11) et la position de fermeture (10).

10. Procédé selon la revendication 8 ou 9 du brevet, dans une étape d), la monture (12) étant placée dans une monture de robinetterie (2), de telle sorte que l'élément de connexion (9) soit sécurisé contre une désolidarisation hors de la position de fermeture (10).
